Europäisches Patentamt

European Patent Office

Office européen des brevets

(11) Publication number: **0 068 742**
**A1**

## (12) EUROPEAN PATENT APPLICATION

(21) Application number: **82303164.6**

(22) Date of filing: **17.06.82**

(51) Int. Cl.³: **C 04 B 13/00**

(30) Priority: **19.06.81 GB 8118948**

(43) Date of publication of application: **05.01.83**
**Bulletin 83/1**

(84) Designated Contracting States: **AT BE CH DE FR IT LI LU NL SE**

(71) Applicant: **CAPE BOARDS & PANELS LIMITED, Iver Lane, Cowley, Uxbridge Middlesex, UB8 2JQ (GB)**
Applicant: **CAPE UNIVERSAL CLADDINGS LIMITED, P.O. Box 165 Tolpits, Watford Hertfordshire, WD1 8QZ (GB)**

(72) Inventor: **Harper, Stephen, 2, Huddleston Road, London, N7 (GB)**
Inventor: **Johnson, Andrew, 46, Westfield Road, Ealing London, W13 9GH (GB)**

(74) Representative: **Votier, Sidney David et al, CARPMAELS & RANSFORD 43, Bloomsbury Square, London WC1A 2RA (GB)**

(54) **Shaped articles.**

(57) A process for manufacturing a non-asbestos shaped article, for example a cladding or roofing sheet, comprises forming into shape an aqueous slurry of a mixture comprising, on a dry weight basis, 50-90% cement, 5-40% highly reactive pozzolanic silica and 5-15% cellulose fibres, while removing water therefrom, and allowing reaction to occur between the cement and the silica by air curing. The highly reactive pozzolanic silica preferably contains at least 80% silicon dioxide, and suitably has a specific surface area (BET) of at least 15,000 m²/kg, most suitably at least 25,000 m²/kg.

"SHAPED ARTICLES"

This invention relates to shaped articles, and especially to such articles which are for use in the building industry.

The invention relates especially to boards and sheets, both flat and corrugated, which are for use for example for cladding and roofing, and to shaped fitments therefor. The invention is also concerned with compositions for use in the manufacture of such shaped articles.

Of all the materials which are known and available for roofing and cladding, asbestos reinforced corrugated cement sheets and boards are among the best, since they possess good strength and their weathering characteristics give them a long life. The basic disadvantage of asbestos-cement sheets is the fact that they contain asbestos, a fibrous material the dust of which is thought to constitute a health hazard, and the industry is therefore constantly seeking alternatives to this material.

No single material has been found with characteristics which satisfactorily match all those of asbestos, and it has thus been proposed to use mixtures of materials, e.g. mixtures of fibrous materials such as cellulose and glass fibres, and mixtures of cellulose fibres with mica or vermiculite. Where fire resistance is not so important cellulose fibres have been used alone to replace asbestos and sheets for building purposes have been made from compositions of cellulosic fibres and cement.

Such cellulose-cement materials possess useful properties, but they are not suitable for outside use since their weathering and freeze-thaw resistance is unsatisfactory and their long term strength is insufficient to meet the required wind loading specifications.

Improved properties in these respects could be achieved by stabilising the cement binder i.e. by causing the products of cement hydration to react with a siliceous component. One way of achieving this is by autoclaving but this requires the use of expensive capital equipment. We have now found that by careful selection of the siliceous compound products can be made with properties similar to those made by autoclaving, but without autoclaving.

It is the primary object of the invention to provide a process and a composition for manufacturing non-asbestos shaped articles, e.g. sheets, especially corrugated sheets, which possess the high strength and durability necessary to permit their satisfactory use as external building materials, e.g. as roofing and cladding sheets, without the need for autoclaving.

According to the invention a process for manufacturing a non-asbestos shaped article comprises forming into shape an aqueous slurry of a mixture comprising, on a dry weight basis, 50-90% cement, 5-40% highly reactive pozzolanic silica and 5-15% cellulose fibres, while removing water therefrom, and allowing reaction to occur between the cement and the silica by air curing.

According to one process aspect, for forming a non-asbestos roofing or cladding sheet, the aqueous slurry is formed into flat sheet shape while removing water therefrom, for example using a Hatschek machine, is then if desired formed into corrugated shape, and is then subjected to air curing to cause the cement and highly reactive silica to react. In another process aspect, a corrugated roofing or cladding sheet is made by charging the aqueous slurry directly onto a corrugated former, for example forming part of a Magnani machine.

The cement is preferably Ordinary Portland Cement.

The highly reactive pozzolanic silica is preferably at least 80% pure and preferably 90-100% pure i.e. % $SiO_2$, and preferably has a specific surface area (BET) of at least 15,000 $m^2$/kg, most suitably at least 25,000 $m^2$/kg. The highly reactive silica is suitably present in the initial mixture in an amount of at least 15%, and preferably in an amount of 24-35%, on a dry weight basis. Most suitably the highly reactive silica is volatilised silica. Suitable sources of volatilised silica are the by-products of the production of silicon metal and of ferro-silicon. Another potentially suitable highly reactive pozzolanic silica is high quality diatomite. Mixtures of pozzolanic silicas may be used e.g. a mixture of volatilised silica and diatomite.

The cellulose fibres are suitably woodpulp, cotton or flax. They are preferably used in an amount of 7 to 12% based on the dry weight of the initial mixture. They are suitably processed to a freeness within the range 18-35°SR.

The initial batch preferably also includes a flocculating agent to assist retention of the slurry solids during sheeting out.

The process of the invention for manufacturing sheets is suitably performed using one of the machines well known in the asbestos-cement sheet manufacturing industry, e.g. the Hatschek, Magnani and Fourdrinier machines.

By means of the use of highly reactive silica the cement is reacted during air curing to a very substantial extent, the free lime which is liberated during hydration of the cement being taken up by reaction with the silica to produce a stable matrix. An additional advantage of the use of highly reactive finely divided silica is that it enhances the mouldability of the sheeted out slurry.

The process of the invention leads to a strong product, having good natural weathering properties, which make it eminently suitable for use as an exterior roofing and cladding material.

The initial slurry may contain additional materials, for example additional reinforcing fibres, and powdered, granular or flaky fillers. Amongst the special fillers which may be used, all of which have particular property-enhancing characteristics, may be mentioned wollastonite, mica, vermiculite and perlite. These may be present, individually or in any combination, in an amount up to a total of 50% by weight, based on the solids content of the initial slurry, and suitably in an individual amount of 2 to 30%, preferably 5 to 13%, on the same basis. The additional fibres may include inorganic fibres, e.g. glass or mineral wool fibres in amounts up to 20% by weight based on the solids content of the initial slurry; and organic fibres, e.g. polypropylene fibres in amounts of 0.05 to 1.0%, on the same basis.

Although the process of the invention is especially adapted for the production of sheets, both flat and corrugated, and is particularly described in relation thereto, it is also appropriate to the production of other shaped articles for use in the building industry. Among these may be mentioned roofing and cladding fitments, e.g. roof lining articles, closures, and bargeboards.

A typical sheet-manufacturing procedure involves the following sequence of operations:-

(1) The cellulose fibres, e.g. of woodpulp, cotton, flax, are processed by pulping, beating and refining, preferably to a freeness in the range 18 to 35° SR.

(2) The other ingredients of the batch, i.e. cement, highly reactive silica, other fillers and fibres if desired, and flocculating agents where appropriate, are mixed with the processed cellulose pulp to produce an aqueous slurry.

(3) The slurry is taken up on the moving permeable felt of a Hatschek machine and forms a thick film of damp composition thereon which is transferred to a rotating drum on which the mixture builds up.

(4) When a desired thickness of mixture has built up on the drum it is removed in the form of a flat sheet, of length e.g. 1 to 4 metres.

(5) The flat sheet is formed into corrugated form, if desired.

(6) It is advisable that, to ensure satisfactory weathering and strength characteristics, the density of the product should exceed 1350 $kg/m^3$. If it is necessary the density of a corrugated sheet may be increased by compression as described in our copending Patent Application No.　　　of even date.

(7) The sheet is passed through a steam tunnel wherein it is air-cured. After 4 to 8 hours the sheets have hardened sufficiently to enable them to be stripped from the stack.   The conditions in the steam tunnel are suitably a minimum temperature of 60°C, and a relative humidity of at least 85%.   Curing conditions should preferably be maintained for at least 24 hours.

(8)   Instead of (7) above, the sheets can be cured in air without the use of steam, or indeed any other source of heat than the cement, the hydration of which is an exothermic reaction which generates sufficient heat to accelerate the lime-silica reaction.   It is however highly advisable to insulate and seal the stacks to prevent heat loss and maintain the humidity at a high level.

(9)   The sheets are allowed to mature in warm moist conditions for 7-14 days.

The following Examples illustrate the invention.

EXAMPLE 1

| Composition | % by weight |
|---|---|
| Cotton unbleached chemically refined (Freeness 23°SR) | 8.0 |
| Ordinary Portland Cement | 67.0 |
| Volatilised Silica | 25.0 |

An aqueous slurry of this composition was run on a Hatschek machine and both flat and "standard six" corrugated sheets were produced.   Some of the "standard six" and flat sheets were pressed before curing and all the sheets were cured at 80°C for 24 hours.   The sheets were matured for 2 weeks at room temperature and high humidity and then they were tested.   Samples were soaked in water for 24 hours before testing, which was carried out as shown below.

Flat 10" x 10" samples were tested using the method described in BS4624. ("MR" is Modulus of Rupture).

| Unpressed | MR | Across grain | 14.5 | $N/mm^2$ |
|---|---|---|---|---|
| | | With grain | 8.2 | $N/mm^2$ |
| | | Mean | 12.4 | $N/mm^2$ |
| | | Density | 1275 | $Kg/m^3$ |

0068742

Pressed    MR    Across grain    20.5    $N/mm^2$
                 With grain      11.6    $N/mm^2$
                 Mean            16.0    $N/mm^2$
                 Density         1516    $Kg/m^3$

"Standard Six" Corrugated Sheets

These were tested using the method described in BS4624.

Unpressed    MR    Across grain    11.3    $N/mm^2$
                   Density         1183    $Kg/m^3$

Pressed      MR    Across grain    17.9    $N/mm^2$
                   Density         1608    $Kg/m^3$

EXAMPLE 2

Composition                                    % by weight

Woodpulp, bleached Kraft 18°SR        11

Volatilised Silica                    24

Ordinary Portland Cement              65.

An aqueous slurry of this composition was run on a Hatschek machine and corrugated "standard six" sheets were manufactured, pressed and tested as in Example 1.

"Standard Six" Sheets

          MR    Across grain    21.2    $N/mm^2$
                Density         1476    $Kg/m^3$

EXAMPLE 3

Composition                                    % by weight

Cotton-chemical
processed and          9
bleached (freeness
25°SR)

Ordinary Portland     69
Cement

Volatilised Silica    22

An aqueous slurry formed from this mixture was run on a Hatschek machine and some of the sheets were pressed. Testing was as described in Example 1. "Standard Six" sheets were manufactured.

Unpressed "Standard Six"

| | | | |
|---|---|---|---|
| | MR | 15.4 | $N/mm^2$ |
| | Density | 1323 | $Kg/m^2$ |

Pressed

| | | | |
|---|---|---|---|
| | MR | 18.5 | $N/mm^2$ |
| | Density | 1450 | $Kg/m^2$ |

EXAMPLE 4

Composition % by weight

| | | |
|---|---|---|
| Cotton | 7.9 | |
| Volatilised Silica | 22.0 | |
| Cement | 70.1 | |

Flat and "Standard Six" sheets were produced from an aqueous slurry of this mix, on a Hatschek machine, without pressing.

Flat

| | | | | |
|---|---|---|---|---|
| MR | Across grain | 21.6 | $N/mm^2$ |
| | With grain | 11.3 | $N/mm^2$ |
| | Mean | 16.5 | $N/mm^2$ |
| | Density | 1385 | $Kg/m^3$ |

"Standard Six"

| | | | | |
|---|---|---|---|---|
| MR | Across grain | 16.9 | $N/mm^2$ |
| | Density | 1370 | $Kg/m^3$ |

The cotton used in this Example was chemically-processed, unbleached, of freeness 30°SR.

CLAIMS

1. A process for manufacturing a non-asbestos shaped article comprising forming into shape an aqueous slurry of a mixture comprising, on a dry weight basis, 50-90% cement, 5-40% highly reactive pozzolanic silica and 5-15% cellulose fibres, while removing water therefrom, and allowing reaction to occur between the cement and the silica by air curing.

2. A process as claimed in claim 1 wherein the cement is Ordinary Portland Cement.

3. A process as claimed in claim 1 or 2 wherein the highly reactive pozzolanic silica contains at least 80% silicon dioxide.

4. A process as claimed in claim 3 wherein the highly reactive pozzolanic silica contains 90-100% silicon dioxide.

5. A process as claimed in any of claims 1 to 4 in which the highly reactive pozzolanic silica has a specific surface area (BET) of at least 15,000 $m^2$/kg.

6. A process as claimed in claim 5 wherein the highly reactive pozzolanic silica has a specific surface area (BET) of at least 25,000 $m^2$/kg.

7. A process as claimed in any of claims 1 to 6 wherein the highly reactive silica is present in the initial mixture in an amount of at least 15% on a dry weight basis.

8. A process as claimed in claim 7 wherein the highly reactive silica is present in the initial mixture in an amount of 24-35%, on a dry weight basis.

9. A process as claimed in any of claims 1 to 8 wherein the highly reactive pozzolanic silica is volatilised silica.

10. A process as claimed in any of claims 1 to 8 wherein the highly reactive pozzolanic silica is diatomite.

11. A process as claimed in any of claims 1 to 10 wherein the cellulose fibres are present in the initial mixture in an amount of 7 to 12%, on a dry weight basis.

12. A process as claimed in any of claims 1 to 11 wherein the cellulose fibres are processed to a freeness within the range 18-35° SR.

13. A process as claimed in any of claims 1 to 12 wherein the initial mixture includes one or more of the following:- a flocculating agent, a reinforcing fibre, and powdered, granular or flaky filler.

14. A process as claimed in claim 13 wherein the initial mixture contains one or more of wollastonite, mica, vermiculite and perlite.

15. A process as claimed in claim 14 wherein each of the wollastonite, mica, vermiculite and perlite is present in an amount up to 30%, by weight, and in total in an amount up to 50% by weight.

16. A process as claimed in claim 13 wherein the initial mixture comprises inorganic fibres in an amount up to 20% by weight, or organic fibres in an amount of 0.05 to 1.0%, by weight.

17. A process as claimed in any of claims 1 to 16 wherein a flat or corrugated sheet is manufactured.

18. A process as claimed in any of claims 1 to 17 wherein the density of the shaped article manufactured exceeds $1,350 kg/m^3$.

19. A process as claimed in any of claims 1 to 18 wherein curing of the cement and silica is conducted in a steam tunnel.

20. A process as claimed in claim 19 wherein the temperature in the steam tunnel is at least 60°C and the relative humidity therein at least 85%.

21. A composition for manufacturing a non-asbestos shaped article comprising an aqueous slurry of a mixture containing, on a dry weight basis, 50-90% cement, 5-40% highly reactive pozzolanic silica and 5-15% cellulose fibres.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | GB-A-2 048 330 (ROCKWOOL) <br><br> *Claims 1,2; page 2; table* | 1,2,9, 13,21 | C 04 B 13/00 |
| Y | US-A-4 087 285 (F.W.A.KURZ) <br><br> *Column 1, lines 42 to 47; column 8, lines 20 to 23* | 1,3-5, 7,9 | |
| X | US-A-3 969 567 (J.E.OCCLESHAW) <br><br><br> *Claims 1,2,10; example 1* | 1,2,10, 11,13 -17,19, 21 | |
| X | FR-A- 851 006 (N.E.OLSSON) <br> *Abstract* | 1,10 | **TECHNICAL FIELDS SEARCHED (Int. Cl. ³)** |
| A | DERWENTS JAPANESE PATENTS REPORT, vol. U, no. 46, 18th December 1973, no. 70430u, London (GB); <br> & JP - A - 73 37 734 (ELECTRO CHEMICAL IND.) (13-11-1973) | | C 04 B 13/00 <br> C 04 B 31/00 <br> C 04 B 43/00 <br> B 28 B 1/00 |

The present search report has been drawn up for all claims

| Place of search | Date of completion of the search | Examiner |
|---|---|---|
| THE HAGUE | 20-09-1982 | DAELEMAN P.C.A. |